# EUROPÄISCHE PATENTSCHRIFT

(11) **EP 1 615 964 B1**
(45) Veröffentlichungstag und Bekanntmachung des Hinweises auf die Patenterteilung: **13.01.2010**
(21) Anmeldenummer: 04723990.0
(22) Anmeldetag: 29.03.2004
(51) Int. Cl.: C08G 18/18, C08G 18/10, C08L 63/02

(54) **VERFAHREN ZUR HERSTELLUNG VON PHENOLISCH-BLOCKIERTEN POLYURETHAN-PREPOLYMEREN**
PROCESS FOR THE MANUFACTURE OF PHENOLIC-BLOCKED POLYURETHANE PREPOLYMERS
PROCEDE DE FABRICATION DE PREPOLYMERES DE POLYURETHANE A BLOCAGE PHENOLIQUE

(30) Priorität: 10.04.2003 DE 10316396
(43) Veröffentlichungstag der Anmeldung: 18.01.2006
(73) Patentinhaber: Bayer MaterialScience AG, 51368 Leverkusen (DE)
(72) Erfinder: MAGER, Michael, 51375 Leverkusen (DE); STINGL, Thomas, 56410 Montabaur (DE)
(86) Internationale Anmeldenummer: PCT/EP2004/003290
(87) Internationale Veröffentlichungsnummer: WO 2004/090008

(56) Entgegenhaltungen:
- DE-A- 2 152 606
- US-A- 3 250 745
- US-A- 4 281 089
- US-A- 6 060 574

## Beschreibung

Die vorliegende Erfindung betrifft ein Verfahren zur Herstellung, niedrigviskoser Polyurethan-Prepolymere (PUR-Prepolymere), die mit Phenolgruppen-haltigen Verbindungen blockierte NCO-Gruppen aufweisen und deren Verwendung zur Herstellung von PolyurethanKunststoffen.

Die aus dem Stand der Technik bekannten Polyamin-/Epoxidharz-Systeme zeichnen sich beispielsweise durch exzellente Metallhaftung, sehr gute Chemikalienbeständigkeit und hervorragende Korrosionsschutzeigenschaften aus. Bei lösemittelhaltigen Formulierungen und Pulverlacksystemen können durch den Einsatz von Epoxidharzen mit hohen Molmassen und/oder Polyaminoamiden, z.B. auf der Basis von Dimerfettsäuren als Härter, vernetzte Filme mit hoher Flexibilität erhalten werden. Beschichtungen auf der Basis von lösemittelfreien Flüssigharzen und lösemittelfreien, aminischen Härtern sind aufgrund der niedrigen Molmassen der Epoxidharze und der daraus resultierenden hohen Netzwerkdichte sehr spröde. Daher werden in lösemittelfreien Formulierungen z.B. Teerersatzstoffe wie Cumaronharze zur Plastifizierung eingesetzt. Insbesondere bei Verwendung größerer Mengen an Kohlenwasserstoffharzen neigen derartige Beschichtungen, infolge Migration der nichtfunktionellen Bestandteile, allerdings zur Langzeitversprödung.

Eine gute und dauerhafte Elastifizierung der Epoxidharze lässt sich durch Kombination mit blockierten Polyurethan-Prepolymeren erreichen.

DE-A 21 52 606 beschreibt in diesem Zusammenhang die Verwendung Alkylphenol-blockierter Polyisocyanate, wobei die hergestellten Reaktivsysteme (z.B. Beschichtungs- oder Verbundmassen) relativ hochviskos sind.

Eine Verbesserung in diesem Punkt kann nach der Lehre aus US-A 6,060,574 durch die Verwendung von Kohlenwasserstoff-Harz-blockierten Polyurethan-Prepolymeren erreicht werden, wobei Reaktivsysteme mit niedrigerer Viskosität erhalten werden.

Als geeignete Katalysatoren für die Blockierungsreaktion werden in DE-A 21 52 606 und US-A 6,060,574 pauschal die an sich in der Polyurethanchemie gebräuchlichen Katalysatoren, unter anderem auch Sn(II) oder Sn(IV)-Verbindungen oder tertiäre Amine wie 1,4-Diazabicyclo[2.2.2]octan (DABCO) oder Triethylamin, beschrieben.

Die einzigen beiden explizit genannten tertiären Amine DABCO bzw. NEt₃ weisen jedoch unerwünschte Nachteile auf. So führt die üblicherweise mit Säurechloriden wie Benzoylchlorid durchgeführte Katalysatordeaktivierung nach erfolgter Blockierungsreaktion zu unerwünschter Ausfällung und Trübungserscheinungen im Produkt, wodurch dieses unbrauchbar wird. Aufgrund seiner hohen Flüchtigkeit (Siedepunkt: 88 - 90°C) wird Triethylamin während der Blockierungsreaktion (Reaktionstemperaturen typischerweise bis 90 - 120°C) hingegen leicht aus dem Reaktionsgemisch ausgetrieben, was u.a. zu einer ungleichmäßigen, schlecht steuerbaren und z.T. stark verlangsamten Reaktionsgeschwindigkeit führt.

Es konnte nun gefunden werden, dass die Verwendung spezieller aminischer Blockierungskatalysatoren, die die vorstehend genannten Nachteile der aminischen Katalysatoren des Standes der Technik auf dem Gebiet der phenolischen NCO-Blockierung nicht aufweisen, zu Polyurethan-Prepolymeren mit signifikant verringerter Viskosität führt, so dass sich daraus neue Reaktivsysteme mit ebenfalls deutlich verminderter Viskosität und daher verbesserten Verarbeitungseigenschaften herstellen lassen.

Gegenstand der Erfindung ist daher ein Verfahren zur Herstellung von phenolisch-blockierten Polyurethan-Prepolymeren, bei dem
a) ein oder mehrere Di- oder Polyisocyanate mit
b) mindestens einer isocyanatreaktiven Verbindung einer Funktionalität von mindestens 1,5, zu einem NCO-funktionellen Polyurethan-Prepolymer umgesetzt werden und anschließend die freien NCO-Gruppen mit
c) mindestens einem phenolische OH-Gruppen aufweisenden Kohlenwasserstoffharz
d) in Anwesenheit eines Katalysators
blockiert werden, der mindestens ein Triorganoamin der folgenden Typen enthält:
i) Verbindungen der allgemeinen Formel (I) 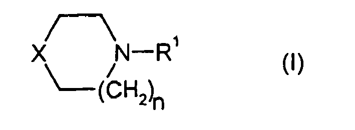 wobei
   - R¹: für einen gegebenenfalls verzweigten C₁-C₃₀-Alkylrest steht,
   - X: gleich O, S oder die Gruppe N-R¹ und
   - n: gleich 0 oder 1 ist,
ii) Verbindungen ausgewählt aus der Gruppe bestehend aus N,N-Dimethyldodecylamin, N,N-Dimethylundecylamin, N,N,N',N'-Tetramethylethylendiamin, N,N,N',N'-Tetramethylhexamethylendiamin, N,N,N',N',N"-Pentamethyldiethylentriamin oder N,N-Dimethylcyclohexylamin.

In einer bevorzugten Ausführungsform der Erfindung werden ausschließlich Verbindungen des vorstehend detailliert beschriebenen Typs ii) als Verbindungen der Komponente d) verwendet.

Zur erfindungsgemäßen Herstellung der Prepolymere eignen sich als Verbindungen der Komponente a) prinzipiell alle aliphatischen, cycloaliphatischen, aromatischen oder heterocyclischen organischen Di- und Polyisocyanate mit mindestens zwei Isocyanatgruppen sowie Gemische davon. Beispielhaft seien aliphatische Di- oder Triisocyanate wie z.B. Butandiisocyanat, Pentandiisocyanat, Hexandiisocyanat (Hexamethylendiisocyanat, HDI), 4-Isocyanatomethyl-1,8-octandiisocyanat (Triisocyanatononan, TIN) oder cyclische Systeme, wie z.B. 4,4'-Methylenbis-(cyclohexylisocyanat) (Desmodur^{®}W, Bayer AG, Leverkusen), 3,5,5-Trimethyl-1-isocyanato-3-isocyanatomethylcyclohexan (Isophorondiisocyanat, IPDI) sowie ω.ω'-Diisocyanato-1,3-dimethylcyclohexan (H₆XDI) oder aromatische Polyisocyanate wie z.B. 1,5-Naphthalendiisocyanat, Diisocyanatodiphenylmethan (MDI) bzw. Roh-MDI, Diisocyanatomethylbenzol (2,4- und 2,6-Toluylendiisocyanat, TDI), insbesondere das 2,4- und das 2,6-Isomere und technische Gemische der beiden Isomeren sowie 1,3-Bis(isocyanatomethyl)benzol (XDI) genannt.

Bevorzugte Verbindungen der Komponente a) sind aromatische Polyisocyanate wie z.B. 1,5-Naphthalendiisocyanat, Diisocyanatodiphenylmethan (MDI) bzw. Roh-MDI, Diisocyanatomethylbenzol (2,4- und 2,6-Toluylendiisocyanat, TDI), insbesondere das 2,4- und das 2,6-Isomere und technische Gemische der beiden Isomeren sowie 1,3-Bis(isocyanatomethyl)benzol (XDI).

Ganz besonders geeignet ist 2,4-Toluylendiisocyanat sowie dessen technisches Gemisch aus 70 bis 90 % 2,4-Toluylendiisocyanat und 30 bis 10 % 2,6-Toluylendiisocyanat.

Ebenfalls geeignet im Sinne der Erfindung sind die an sich bekannten Folgeprodukte der jeweils vorstehend genannten Isocyanate mit Biuret-, Isocyanurat-, Iminooxadiazindion-, Uretdion-, Allophanat und/oder Urethanstruktur.

Als isocyanatreaktive Verbindung der Komponente b) können bevorzugt alle dem Fachmann bekannten Polyhydroxy-Verbindungen einer OH-Funktionalität > 1,5 verwendet werden, wie beispielsweise niedermolekulare Diole (z.B. 1,2-Ethandiol, 1,3- bzw. 1,2 Propandiol, 1,4-Butandiol), Triole (z.B. Glycerin, Trimethylolpropan) und Tetraole (z.B. Pentaerythrit), Polyetherpolyole, Polyesterpolyole, Polycarbonatpolyole sowie Polythioetherpolyole. Bevorzugte Polyhydroxyverbindungen der vorstehend genannten Art sind Substanzen auf Polyetherbasis.

Besonders bevorzugte Polyhydroxyverbindungen der vorstehend genannten Art sind Polyetherpolyole einer OH-Funktionalität ≥ 1,9, bevorzugt ≥ 1,95, und eines Molekulargewichtsbereichs von 300 bis 20.000, bevorzugt 1.000 bis 12.000, besonders bevorzugt 2.000 bis 6.000, die in an sich bekannter Weise durch Alkoxylierung von geeigneten Starter-Molekülen zugänglich sind.

Ganz besonders bevorzugte Polyhydroxyverbindungen sind Polyetherpolyole der vorstehend genannten Art mit einem Gehalt an ungesättigten Endgruppen von kleiner oder gleich 0,02 Milliäquivalente pro Gramm Polyol, bevorzugt kleiner oder gleich 0,015 Milliäquivalente pro Gramm Polyol, besonders bevorzugt kleiner oder gleich 0,01 Milliäquivalente pro Gramm Polyol (Bestimmungsmethode ASTM D2849-69) sowie einer Molekulargewichtsverteilung (Polydispersität; PD = M_{w}/Mₙ) von 1,1 bis 1,5. Diese sind in an sich bekannter Weise z.B. nach US-A 5158 922 (z.B. Beispiel 30) oder EP-A 0 654 302 (S. 5, Z. 26 bis S. 6, Z. 32) durch Alkoxylierung von geeigneten Starter-Molekülen, insbesondere unter Verwendung von Doppelmetallcyanid-Katalysatoren (DMC-Katalyse), herstellbar.

In Tabelle 1 sind beispielhaft einzelne Polyetherpolyole der ganz besonders bevorzugten Art aufgeführt:

**Tabelle 1**

| | **Acclaim^{®} 1000** | **Acclaim^{®} 2200** | **Acclaim^{®} 3201** | **Acclaim^{®} 4200** | **Acclaim^{®} 6300** | **Acclaim^{®} 8200** | **Acclaim^{®} 12200** |
|---|---|---|---|---|---|---|---|
| **Physikalische Daten** | | | | | | | |
| Molekulargewicht | 1000 | 2000 | 3000 | 4000 | 6000 | 8000 | 12000 |
| Funktionalität | 2 | 2 | 2 | 2 | 3 | 2 | 2 |
| Viskosität (25°C) | 70 | 335 | 620 | 980 | 1470 | 3000 | 5950 |

| **Chemische Daten** | | | | | | | |
|---|---|---|---|---|---|---|---|
| OH-Zahl (mg KOH/g) | 112 | 56 | 37 | 28 | 28 | 14 | 10 |
| Doppelbindungsanteil (meq/g) | ≤ 0,0070 | ≤ 0,0070 | ≤ 0,0070 | ≤ 0,0070 | ≤ 0,0070 | ≤ 0,0070 | ≤ 0,0070 |
| Säurezahl (mg KOH/g) | 0,02 | 0,02 | 0,018 | 0,018 | 0,02 | 0,02 | 0,02 |

| | | | | | | | |
|---|---|---|---|---|---|---|---|
| Alle Acclaim^{®}-Produkte sind bei der Bayer AG, Leverkusen, Deutschland, erhältlich. | | | | | | | |

Geeignete Starter-Moleküle für die Herstellung der genannten Polyetherpolyole sind beispielsweise einfache, niedermolekulare Polyole, Wasser, organische Polyamine mit mindestens zwei N-H-Bindungen oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Bevorzugte Starter-Moleküle zur Herstellung der Polyetherpolyole durch Alkoxylierung, insbesondere nach dem DMC-Verfahren, sind Polyole wie Ethylenglykol, Propylenglykol-1,3- und Butandiol-1,4, Hexandiol-1,6, Neopentylglykol, 2-Ethylhexandiol-1,3, Glyzerin, Trimethylolpropan, Pentaerythrit sowie niedermolekulare, Hydroxylgruppen aufweisende Ester derartiger Polyole mit Dicarbonsäuren der nachstehend beispielhaft genannten Art oder niedermolekulare Ethoxylierungs- oder Propoxylierungsprodukte derartiger einfacher Polyole oder beliebige Gemische derartiger modifizierter oder nicht modifizierter Alkohole.

Die in Komponente c) eingesetzten, phenolische OH-Gruppen aufweisenden Kohlenwasserstoff-Harze sind prinzipiell bekannt und beispielhaft in Ullmanns Encyklopädie der technischen Chemie, 4. Auflage, Band. 12, S. 539 bis 545, (Verlag Chemie, Weinheim 1976), Kirk-Othmer, Encyclopedia of Chemical Technology, 3. Auflage, Band 12, S. 852 bis 869, (John Wiley & Sons, New York 1980) oder Encyclopedia of Polymer Science and Engineering, Bd. 7, S. 758 bis 782, (John Wiley & Sons, New York 1987) beschrieben. Beispiele für geeignete phenolische OH-Gruppen aufweisende Kohlenwasserstoffharze c) sind Cumaron-Inden-Harze, Petroleumharze oder Terpenharze.

Derartige, phenolische OH-Gruppen aufweisende Kohlenwasserstoff-Harze werden typischerweise hergestellt durch Copolymerisation von ungesättigten Kohlenwasserstoffen der nachstehend genannten Art mit Phenol und/oder alkylierten Phenolen wie z. B. Kresole in Gegenwart von starken Säuren oder Katalysatoren vom Friedel-Crafts-Typ. Geeignete ungesättigte Kohlenwasserstoffe zur Herstellung der erfindungsgemäß einsetzbaren OH-funktionellen Kohlenwasserstoffharze sind die bei der Crackung von Naphtha oder Gasöl anfallenden Kohlenwasserstoffe, wie beispielsweise Buten, Butadien, Penten, Piperylen, Isopren, Cyclopentadien, Styrol, α-Methylstyrol, Vinyltoluol, Dicyclopentadien, Methyldicyclopentadien, Inden oder Methylinden. Als ungesättigte Kohlenwasserstoffe eignen sich außerdem Terpenharze, wie beispielsweise α-Pinen, β-Pinen, Dipenten, D-Limonen oder Terpentin.

Die geeigneten Kohlenwasserstoff-Harze weisen einen Hydroxylgruppengehalt von 0,1 bis 10,0 Gew.-% auf. Besonders bevorzugt werden bei Raumtemperatur flüssige Kohlenwasserstoff-Harze mit einem Hydroxylgruppengehalt von 2 bis 8 Gew.-%, ganz besonders bevorzugt von 3 bis 5 Gew.-%, eingesetzt.

Beispielsweise geeignete KW-Harze sind unter dem Handelnamen Novares^{®} der Firma Rütgers, Duisburg, Deutschland, oder Nevoxy^{®}der Fa. Neville Chemical Europe Polymers BV, Uithoom, Niederlande, kommerziell erhältlich.

Die Herstellung der Isocyanatgruppen-haltigen Polyurethan-Prepolymere erfolgt durch Umsetzung der isocyanatreaktiven Verbindungen b) mit überschüssigen Mengen der Di- oder Polyisocyanate a) oder auch mit einem großen Überschuss der genannten Di- oder Polyisocyanate und anschließender Entfernung des überschüssigen Polyisocyanates, z.B. durch Dünnschichtdestillation. Bevorzugt liegt das Molverhältnis der isocyanatreaktiven-Gruppen der Komponente b) zu den NCO-Gruppen des Di- oder Polyisocyanats a) zwischen 1:1,5 und 1:20, besonders bevorzugt zwischen 1:1,8 und 1:5 und ganz besonders bevorzugt zwischen 1:1,95 und 1:2,05. Die Herstellung der Polyurethan-Prepolymere erfolgt im Allgemeinen bei 20 bis 140°C, bevorzugt bei 40 bis 100°C.

Die Herstellung der erfindungsgemäßen phenolisch blockierten Polyurethan-Prepolymere erfolgt anschließend durch Umsetzung der Isocyanatgruppen-haltigen Polyurethan-Prepolymere mit den phenolische OH-Gruppen aufweisenden Kohlenwasserstoff-Harzen und/oder den gegebenenfalls substituierten Phenolen c) bei Temperaturen von 40°C bis 150°C, bevorzugt bei 50°C bis 100°C, besonders bevorzugt bei 60 bis 90°C, in Gegenwart der Triorganoamin-Katalysatoren d).

Die Menge der bei der Blockierungsreaktion eingesetzten Komponente c) sollte zumindest 30 Mol-%, bevorzugt 50 Mol-%, besonders bevorzugt mehr als 95 Mol-%, der Menge der zu blockierenden Isocyanatgruppen entsprechen. Ein geringer Überschuss an Blockierungsmittel kann zweckmäßig sein, um ein vollständige Reaktion aller Isocyanatgruppen zu gewährleisten. In der Regel beträgt der Überschuss nicht mehr als 20 Mol-%, bevorzugt nicht mehr als 15 Mol-% und besonders bevorzugt nicht mehr als 10 Mol-%, bezogen auf die zu blockierenden Isocyanatgruppen. Ganz besonders bevorzugt liegt die Menge der bei der Blockierungsreaktion eingesetzten Komponente c) daher bei 95 Mol-% bis 110 Mol-%, bezogen auf die Menge der zu blockierenden Isocyanatgruppen des Polyurethan-Prepolymers.

Die Blockierungsreaktion kann gegebenenfalls in Anwesenheit inerter Lösungsmittel bzw. Lacklösungsmitteln wie beispielsweise Ethylacetat, Butylacetat, Methoxypropylacetat, Methylethylketon, Methylisobutylketon, Toluol, Xylol, aromatische oder (cyclo-) aliphatische Kohlenwasserstoffgemische oder beliebige Gemische derartiger Lösungsmittel durchgeführt werden. Diese Lösemittel bzw. Lacklösemittel müssen dann im Anschluss an die Synthese zum Erhalt von lösemittelfreien Reaktivsystemen z.B. destillativ wieder abgetrennt werden.

Bevorzugt werden die erfindungsgemäßen Umsetzungen jedoch lösemittelfrei durchgeführt.

In einer bevorzugten Ausführungsform wird das Di- oder Polyisocyanat a) in einem geeigneten Reaktionsgefäß vorgelegt und gegebenenfalls unter Rühren auf 40 bis 150°C, bevorzugt auf 60 bis 120°C und besonders bevorzugt auf 60 bis 100°C erwärmt. Nach Erreichen der gewünschten Temperatur wird dann unter Rühren die isocyanatreaktive Komponente b) zugegeben und solange gerührt, bis der theoretische NCO-Gehalt des nach der gewählten Stöchiometrie zu erwartenden Polyurethan-Prepolymers erreicht oder geringfügig unterschritten ist. Anschließend wird bei einer Temperatur in den vorstehend bei der Prepolymerbildung genannten Bereichen das Blockierungsmittel c) und der Triorganoamin-Katalysator d), unerheblich ist in welcher Reihenfolge, zugesetzt. Nach Zugabe der Komponenten c) und d) wird die Reaktionsmischung solange erwärmt, bis der Gehalt an freien Isocyanatgruppen kleiner als 0,5 Gew.-%, bevorzugt kleiner als 0,2 Gew.-%, besonders bevorzugt kleiner als 0,1 Gew.-%, ist. Danach wird das Reaktionsgemisch abgekühlt und gegebenenfalls noch mit einem Reaktionsstopper, wie z.B. Benzoylchlorid zur Desaktivierung des Katalysators versehen.

In einer weiteren bevorzugten Ausführungsform wird wie vorstehend beschrieben verfahren mit der Abwandlung, dass zur Prepolymerbildung Komponente b) vorgelegt wird und a) zugegeben wird.

Die erfindungsgemäß hergestellten phenolisch-blockierten Polyurethan-Prepolymere zeichnen sich durch eine besonders niedrige Viskosität, verglichen mit analogen Polymeren, die mit nichtaminischen Katalysatoren hergestellt wurden, aus. Daher lassen sie sich beispielsweise besonders gut in lösemittelarmen oder -freien Reaktivsystemen einsetzen, da sie ihnen aufgrund ihrer Viskosität besonders vorteilhafte Verarbeitungseigenschaften, wie z.B. gute Fließfähigkeit oder Verlaufseigenschaften, verleihen, so dass besonders hochwertige und gleichmäßige Beschichtungen oder Verklebungen erhalten werden können.

Solche Reaktivsysteme enthalten beispielsweise
A) ein oder mehrere blockierte Polyurethan-Prepolymere der erfindungsgemäßen Art,
B) ein oder mehrere organische Amine mit mindestens zwei primären Aminogruppen,
C) gegebenenfalls Oxirangruppen aufweisende Verbindungen, die im Durchschnitt mehr als eine Oxirangruppe pro Molekül enthalten,
D) gegebenenfalls Katalysatoren und/oder Additive und
E) gegebenenfalls Verbindungen durch Reaktion von einer oder mehreren der Komponenten A) - D) untereinander.

Als Verbindungen der Komponente B) des erfindungsgemäßen Reaktivsystems sind Polyamine geeignet, die mindestens zwei primäre Aminogruppen pro Molekül und gegebenenfalls noch sekundäre Aminogruppen aufweisen und bevorzugt ein mittleres Molekulargewicht von 60 bis 500 aufweisen. Geeignet sind beispielsweise Ethylendiamin, 1,2- und 1,3-Diaminopropan, 1,4-Diaminobutan, 2,2,4- und/oder 2,4,4-Trimethylhexamethylendiamin, die isomeren Xylylendiamine, 1,2- und 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcyclohexylamin oder technisches Bisaminomethyltricyclodecan oder auch solche Polyamine, die neben mindestens zwei primären Aminogruppen noch sekundäre Aminogruppen aufweisen, wie beispielsweise Diethylentriamin oder Triethylentetramin.

Bevorzugt werden die Polyamine, insbesondere Diamine des genannten Molekulargewichtsbereichs, eingesetzt, die einen oder mehrere cycloaliphatische Ringe aufweisen. Hierzu gehören beispielsweise 1,2- und 1,4-Diaminocyclohexan, 4,4'-Diaminodicyclohexylmethan, 1,3-Diaminocyclopentan, 4,4'-Diaminodicyclohexylsulfon, 4,4'-Diaminodicyclohexylpropan-1,3, 4,4'-Diaminodicyclohexylpropan-2,2, 3,3'-Dimethyl-4,4'-diaminodicyclohexylmethan, 3-Aminomethyl-3,3,5-trimethylcyclohexylamin (Isophorondiamin), 3(4)-Aminomethyl-1-methylcyclohexylamin oder technisches Bisaminomethyltricyclodecan.

Ebenfalls einsetzbar als Verbindungen der Komponente B) sind Addukte, die durch Umsetzung eines Überschusses der genannten Polyamine mit Epoxidharzen der nachstehend genannten Art hergestellt werden.

Weiterhin einsetzbar in Komponente B) sind Polyetheramine, die durch Umsetzung von Polyetherpolyolen mit Ammoniak hergestellt werden und beispielsweise von der Fa. Huntsman, USA unter dem Handelsnamen "Jeffamin^{®}" vertrieben werden.

Des weiteren sind auch Polyamidharze als Bestandteile der Komponente B) geeignet. Derartige Polyamidharze, zu denen die Polyaminoamide und die Polyaminoimidazoline gehören, werden z.B. von der Henkel KGaA, Düsseldorf, DE unter dem Handelsnamen "Versamid^{®}" vertrieben.

Selbstverständlich ist es auch möglich Gemische der genannten Polyamine als Komponente B) einzusetzen.

Als Verbindungen der Komponente C) können alle Oxirangruppen-aufweisenden Verbindungen, wie z.B. Epoxyharze, verwendet werden, die im Durchschnitt mehr als eine Epoxidgruppe pro Molekül enthalten. Beispielsweise geeignet sind Glycidylether von mehrwertigen Alkoholen wie z.B. Butandiol, Hexandiol, Glycerin, hydriertem Diphenylolpropan oder mehrwertigen Phenolen wie z.B. Resorcin, Diphenylolpropan-2,2 (Bisphenol A), Diphenylolmethan (Bisphenol F) oder Phenol-Aldehyd-Kondensaten. Es können auch Glycidylester mehrwertiger Carbonsäuren, wie Hexahydrophtalsäure oder dimerisierte Fettsäure verwendet werden.

Bevorzugt ist der Einsatz von flüssigen Epoxidharzen auf Basis von Epichlorhydrin und Diphenylolpropan-2,2 (Bisphenol A) oder Diphenylolmethan (Bisphenol F) oder deren Mischungen. Gegebenenfalls kann mit monofunktionellen Epoxidverbindungen die Viskosität der Mischungen gesenkt werden und dadurch die Verarbeitung verbessert werden. Beispiele hierfür sind aliphatische und aromatische Glycidylether wie Butylglycidylether, Phenylglycidylether oder Glycidylester wie Versaticsäureglycidylester oder Epoxide wie Styroloxid oder 1,2-Epoxidodecan.

In diesen Reaktivsystemen liegen im allgemeinen pro Epoxidgruppe der Komponente C) 0,4 bis 0,9, bevorzugt 0,5 bis 0,8 primäre Aminogruppen der Komponente B) und 0,02 bis 0,6, bevorzugt 0,03 bis 0,5 blockierte Isocyanatgruppen der Komponente A) vor.

Zur Herstellung von gebrauchsfertigen Mischungen können den Reaktivsystemen in Komponente D) neben A) , B) und gegebenenfalls C) die üblichen Hilfs- und Zusatzmittel wie beispielsweise

Füllstoffe, Lösungsmittel, Verlaufshilfsmittel, Pigmente, Lösungsmittel, Reaktionsbeschleuniger oder Viskositätsregulatoren beigemischt werden. Beispielhaft genannt seien Reaktionsbeschleuniger wie Salicylsäure, Bis(dimethylaminomethyl)phenol oder Tris(dimethylaminomethyl)-phenol, Füllstoffe wie Sand, Gesteinsmehl, Kieselsäure, Asbestmehl, Kaolin, Talkum, Metallpulver, Teer, Teerpech, Asphalte, Korkschrote, Polyamide, Weichmacher wie beispielsweise Phtalsäureester oder andere Viskositätsregulatoren wie beispielsweise Benzylalkohol.

Selbstverständlich kann der gebrauchsfertigen Mischung gegebenenfalls bis zu 20 Gew.-%, bevorzugt bis zu 10 Gew.-%, besonders bevorzugt bis zu 5 Gew.-% eines Lösemittels oder Lacklösemittels der zuvor bereits beschriebenen Art für applikationstechnische Zwecke zugefügt werden. Sollte an dieser Stelle Lösemittel eingesetzt werden, kann auch bei einem eventuellen Einsatz von Lösemitteln während der Herstellung der erfindungsgemäßen PU-Prepolymere auf das Entfernen des Lösemittels verzichtet werden. Bevorzugt sind allerdings lösemittelfreie gebrauchsfertige Mischungen.

Darüber hinaus zeigen die blockierten Polyurethan-Prepolymere eine hervorragende Verträglichkeit mit den Komponenten B) und C), da die Reaktion von Epoxidharz/Amin und blockiertem Isocyanat/Amin so eingestellt werden kann, dass die Reaktivsysteme einen verträglichen Blend bei Raumtemperatur ergeben.

Reaktivsysteme enthaltend die blockierten Polyurethan-Prepolymere sind zur Herstellung von Beschichtungen, Klebstoffen, Dichtungsmassen, Vergussmassen oder Formteilen auf allen Anwendungsgebieten, wo gute Haftung, Chemikalienfestigkeit, sowie hohe Schlag- und Stoßfestigkeit, verbunden mit guter Flexibilität und Elastizität gefordert werden gut geeignet. Besonders gut geeignet sind die erfindungsgemäßen Systeme als Korrosionsschutzbeschichtungen. Insbesondere bei Belastung mit aggressiven Medien, wie beispielsweise bei der Ballasttank-Beschichtung zeichnen sich die Systeme durch eine gute Nasshaftung und eine gute Haftung unter Kathodenschutzbedingungen aus.

Die Reaktivsysteme können dabei auf den unterschiedlichsten Untergründen eingesetzt werden. Als Beispiele seien genannt mineralische Untergründe, z.B. aus Beton und/oder Stein, metallische Untergründe, z.B. aus Eisen, Stahl, Kupfer, Messing, Bronze, Aluminium oder Titan sowie aus Legierungen der genannten Metalle, und Kunststoffe, z.B. in Form bereits bestehender Beschichtungen auf beispielsweise den genannten metallischen oder mineralischen Untergründen.

Die Reaktivsysteme können beispielsweise durch Gießen, Streichen, Tauchen, Spritzen, Fluten, Rakeln oder Walzen auf die zu beschichtende Oberfläche applizierte werden. Je nach Anwendungsgebiet können somit Schichtdicken von 10 µm (z.B. für dünne Korrosionsschutzbeschichtungen) bis zu mehreren Zentimetern (z.B. für rißüberbrückende Vergussmassen) erzielt werden.

Je nach gewählter Zusammensetzung der Reaktivsysteme, härten diese bei Umgebungsbedingungen, d.h. bei Temperaturen von vorzugsweise -30°C bis 50°C und einer relative Feuchte von vorzugsweise 10 % bis 90 % innerhalb von wenigen Minuten bis zu einigen Tagen. Durch erhöhte Temperaturen, d.h. oberhalb der genannten 50°C, kann die Aushärtung zusätzlich forciert werden, was in der Praxis ebenfalls gewünscht sein kann.

### Beispiele

### Vorbemerkung:

Die Bestimmung des Gehaltes freier Isocyanatgruppen (NCO-Gehalt) erfolgte durch Zugabe einer definierten Menge einer Di-n-butylamin-Lösung (1 mol/Liter in Chlorbenzol) zur zu bestimmenden Probe gelöst in Chlorbenzol/Ethanol (ca. 1:3 Vol.-Teile) und Titration mit 1 N Salzsäure. Der Gehalt blockierter Isocyanatgruppen (blockierter NCO-Gehalt) wurde aus dem NCO-Gehalt des Isocyanat-funktionellen Polyurethan-Prepolymers errechnet.

Die in den Beispielen zur Herstellung der erfindungsgemäßen blockierten Polyurethan-Prepolymere eingesetzten Polyetherpolyole sind bei der Bayer AG, Leverkusen, Deutschland, erhältlich, und sind durch folgende Kennzahlen charakterisiert:

**Tabelle 2:**

| | Acclaim^{®} 1000 | Acclaim^{®} 2200 | Acclaim^{®} 3201 | Acclaim^{®} 4200 |
|---|---|---|---|---|
| **Physikalische Daten** | | | | |
| Molekulargewicht | 1000 | 2000 | 3000 | 4000 |
| OH-Funktionalität | 2 | 2 | 2 | 2 |
| Viskosität (25°C) | 70 | 335 | 620 | 980 |

| **Chemische Daten** | | | | |
|---|---|---|---|---|
| OH-Zahl (mg KOH/g) | 112 | 56 | 37 | 28 |
| Gehalt ungesättigter Endgruppen (meq/g) | ≤ 0,0070 | ≤ 0,0070 | ≤ 0,0070 | ≤ 0,0070 |
| Säurezahl (mg KOH/g) | 0,02 | 0,02 | 0,018 | 0,018 |

### Eingesetzte Materialien:

| **Handelsname** | **chem. Bezeichnung** | **Hersteller** |
|---|---|---|
| Novares^{®} LX 200 | Phenolisch modifiziertes Kohlenwasserstoff-Flüssigharz, Co-Polymerisat ungesättigter, aromatischer C₉-/C₁₀-Kohlenwasserstoffe; OH-Gehalt: 4 Gew.-% | VFT AG, Duisburg, DE |
| D.E.R 358 | flüssiges Epoxidharz auf Basis Bisphenol A und Bisphenol F; Epoxid-Gehalt: 24,6 Gew.-% | Dow Plastics, Midland, USA |
| Perenol^{®} E 8 | Additiv zur Entlüftung und Entschäumung | Cognis Deutschland GmbH&Co. KG, Düsseldorf, DE |
| Laromin^{®} C 260 | Bis(4-Amino-3-methylcyclohexyl)methan | BASF AG, Ludwigshafen, DE |

### Vergleichsbeispiel 1:

### a) Herstellung eines blockierten Polyurethan-Prepolymers:

41,5 g einer Mischung aus 2,4-Diisocyanatotoluol und 2,6-Diisocyanatotoluol (80:20 Gewichtsteile) wurden in einem Kolben mit Innenthermometer, mechanischem Rührer, Tropftrichter und Rückflusskühler bei 80°C vorgelegt. Innerhalb von 5 Stunden wurden dann unter Rühren 238,8 g des Polyetherpolyols Acclaim^{®} 2200 der OH-Zahl 56 zugegeben. Nun wurde die Reaktionsmischung solange bei 80°C unter Rühren prepolymerisiert, bis der theoretische NCO-Gehalt von 3,58 Gew.-% erreicht war. Bei einer Temperatur von 65 bis 75°C wurden anschließend noch 119,7 g eines handelsüblichen Kohlenwasserstoff-Harzes mit einem Hydroxylgruppengehalt von 4 Gew.-% (Novares^{®} LX 200) unter Rühren zugegeben, und die Reaktionsmischung mit 0,03 g Dibutylzinn(II)dilaurat katalysiert. Nun wurde solange unter Rühren auf 80°C erwärmt, bis ein NCO-Gehalt (Titration) von 0,2 Gew.-% erreicht war. Schließlich wurden noch 0,06 g Benzoylchlorid zugegeben und das Produkt auf Raumtemperatur abgekühlt. Das erhaltene, blockierte Polyurethan-Prepolymer ergab folgende Kenndaten:

| | |
|---|---|
| blockierter NCO-Gehalt: | 2,44 Gew.-% |
| Viskosität (23°C): | 86.000 mPas |

### b) Herstellung eines Reaktivsystems:

20 g des nach Vergleichsbeispiel 1a) hergestellten blockierten Polyurethan-Prepolymers wurden mit 20 g DER^{®} 358, 0,4 g Ölsäure, 0,2 g Perenol^{®} E 8, 0,2 g 2,3-Dimethyl-3,4,5,6-tetrahydropyrimidin sowie 6,75 g Octahydro-4.7-methanoinden-1(2).5(6)dimethanamin und 0,2 g Benzylalkohol vermischt und einen Tag bei Raumtemperatur ausgehärtet. Es wurde ein homogener, elastischer Kunststoff mit folgenden mechanischen Kennwerten erhalten:

| | |
|---|---|
| Bruchspannung: | 21,4 MPa |
| Bruchdehnung: | 38,9 % |
| Weiterreißwiderstand: | 39,1 N/mm |

### Vergleichsbeispiel 2:

35,6 g einer Mischung aus 2,4-Diisocyanatotoluol und 2,6-Diisocyanatotoluol (80:20 Gewichtsteile) wurden in einem Kolben mit Innenthermometer, mechanischem Rührer, Tropftrichter und Rückflusskühler bei 80°C vorgelegt. Innerhalb von 5 Stunden wurde dann unter Rühren eine Mischung aus 261,0 g eines Polyetherpolyols der OH-Zahl 44, hergestellt durch basisch katalysierte, gleichzeitige Ethoxylierung und Propoxylierung (EO/PO-Verhältnis = 2:8) eines 2:1 Gemisches von Propylenglykol und Glycerin, und 0,02 g 3-Chlorpropionsäure zugegeben. Nun wurde die Reaktionsmischung solange bei 80°C unter Rühren prepolymerisiert, bis der theoretische NCO-Gehalt von 2,90 Gew.-% erreicht war. Bei einer Temperatur von 65 bis 75°C wurden anschließend noch 102,6 g eines handelsüblichen Kohlenwasserstoff-Harzes mit einem Hydroxylgruppengehalt von 4 Gew.-% (Novares^{®} LX 200) unter Rühren zugegeben, und die Reaktionsmischung mit 0,24 g Dibutylzinn(II)dilaurat katalysiert. Nun wurde solange unter Rühren auf 80°C erwärmt, bis ein NCO-Gehalt (Titration) von 0,2 Gew.-% erreicht war. Schließlich wurden noch 0,47 g Benzoylchlorid zugegeben und das Produkt auf Raumtemperatur abgekühlt. Das erhaltene, blockierte Polyurethan-Prepolymer ergab folgende Kenndaten:

| | |
|---|---|
| blockierter NCO-Gehalt: | 2,22 Gew.-% |
| Viskosität (23°C): | 150.000 mPas |

### Vergleichsbeispiel 3:

Analog dem in Vergleichsbeispiel 1 beschriebenen Verfahren, wurde aus 26,0 g einer Mischung aus 2,4-Diisocyanatotoluol und 2,6-Diisocyanatotoluol (80:20 Gewichtsteile) und 298,4 g des Polyetherpolyols Acclaim^{®} 4200 (OH-Zahl 28) ein Polyurethan-Prepolymer mit einem theoretischen NCO-Gehalt von 1,93 Gew.-% hergestellt, welches mit 74,8 g eines handelsüblichen Kohlenwasserstoff-Harzes mit einem Hydroxylgruppengehalt von 4 Gew.-% (Novares^{®} LX 200) in Gegenwart von 0,28 g Dibutylzinn(II)dilaurat blockiert wurde. Nach dem Abstoppen mit 0,56 g Benzoylchlorid wurde ein blockiertes Polyurethan-Prepolymer mit folgenden Kenndaten erhalten:

| | |
|---|---|
| blockierter NCO-Gehalt: | 1,57 Gew.-% |
| Viskosität (23°C): | 63.000 mPas |

### Vergleichsbeispiel 4:

Analog dem in Vergleichsbeispiel 1 beschriebenen Verfahren, wurde aus 31,9 g einer Mischung aus 2,4-Diisocyanatotoluol und 2,6-Diisocyanatotoluol (80:20 Gewichtsteile) und 275,3 g des Polyetherpolyols Acclaim^{®} 3201 (OH-Zahl 37) ein Polyurethan-Prepolymer mit einem theoretischen NCO-Gehalt von 2,51 Gew.-% hergestellt, welches mit 92,0 g eines handelsüblichen Kohlenwasserstoff-Harzes mit einem Hydroxylgruppengehalt von 4 Gew.-% (Novares^{®} LX 200) in Gegenwart von 0,28 g Dibutylzinn(II)dilaurat blockiert wurde. Nach dem Abstoppen mit 0,56 g Benzoylchlorid wurde ein blockiertes Polyurethan-Prepolymer mit folgenden Kenndaten erhalten:

| | |
|---|---|
| blockierter NCO-Gehalt: | 1,88 Gew.-% |
| Viskosität (23°C): | 52.000 mPas |

### Vergleichsbeispiel 5:

Analog dem in Vergleichsbeispiel 2 beschriebenen Verfahren wurde aus 41,4 g 2,4-Diisocyanatotoluol und 303,4 g des in Vergleichsbeispiel 2 beschriebenen Polyethers unter Zusatz von 10 mg 3-Chlorpropionsäure ein Isocyanat-funktionelles Prepolymer mit einem (theoretischen) NCO-Gehalt von 2,90 Gew.-% hergestellt, welches schließlich mit 55,1 g Nonylphenol in Gegenwart von 30 mg Dibutylzinn(II)dilaurat blockiert und mit 60 mg Benzoylchlorid abgestoppt wurde. Das blockierte Polyurethan-Prepolymer zeigte folgende Kenndaten:

| | |
|---|---|
| blockierter NCO-Gehalt: | 2,53 Gew.-% |
| Viskosität (23°C): | 119.000 mPas |

### Vergleichsbeispiel 6:

Analog dem in Vergleichsbeispiel 1 beschriebenen Verfahren, wurde aus 31,2 g einer Mischung aus 2,4-Diisocyanatotoluol und 2,6-Diisocyanatotoluol (80:20 Gewichtsteile) und 179,1 g des Polyetherpolyols Acclaim^{®} 2200 (OH-Zahl 56) ein Polyurethan-Prepolymer mit einem (theoretischen) NCO-Gehalt von 3,58 Gew.-% hergestellt, welches mit 89,8 g eines handelsüblichen Kohlenwasserstoff-Harzes mit einem Hydroxylgruppengehalt von 4 Gew.-% (Novares^{®} LX 200) in Gegenwart von 20 mg 1,4-Diazabicyclo[2.2.2]octan (DABCO) blockiert wurde. Nach dem Abstoppen mit 50 mg Benzoylchlorid wurde ein blockiertes Polyurethan-Prepolymer erhalten, welches nach 7 Tagen Lagerung bei 50°C eine deutliche Trübung zeigte und somit für eine weitere Verarbeitung unbrauchbar geworden war.

### Vergleichsbeispiel 7:

Analog dem in Vergleichsbeispiel 1 beschriebenen Verfahren, wurde aus 41,5 g einer Mischung aus 2,4-Diisocyanatotoluol und 2,6-Diisocyanatotoluol (80:20 Gewichtsteile) und 238,7 g des Polyetherpolyols Acclaim^{®} 2200 (OH-Zahl 56) ein Polyurethan-Prepolymer mit einem theoretischen NCO-Gehalt von 3,58 Gew.-% hergestellt, welches mit 119,7 g eines handelsüblichen Kohlenwasserstoff-Harzes mit einem Hydroxylgruppengehalt von 4 Gew.-% (Novares^{®} LX 200) in Gegenwart von 0,07 g 1,8-Diazabicyclo[5.4.0]undec-7-en blockiert wurde. Nach dem Abstoppen mit 0,07 g Benzoylchlorid wurde ein blockiertes Polyurethan-Prepolymer mit folgenden Kenndaten erhalten:

| | |
|---|---|
| blockierter NCO-Gehalt: | 2,52 Gew.-% |
| Viskosität (23°C): | 98.000 mPas |

In Hinblick auf das Vergleichsbeispiel 1 (Zinn-haltiger Katalysator) wird durch die Verwendung dieses Amin-Katalysators keine signifikante Verringerung der Viskosität erreicht.

### Vergleichsbeispiel 8:

Analog dem in Vergleichsbeispiel 7 beschriebenen Verfahren wurde ein blockiertes Polyurethan-Prepolymer mit den folgenden Kenndaten hergestellt, jedoch wurden als Katalysator 0,06 g 1,5-Diazabicyclo[4.3.0]non-5-en eingesetzt und die Reaktion mit 0,06 g Benzoylchlorid abgestoppt:

| | |
|---|---|
| blockierter NCO-Gehalt: | 2,53 Gew.-% |
| Viskosität (23°C): | 83.000 mPas |

In Hinblick auf das Vergleichsbeispiel 1 (Zinn-haltiger Katalysator) wird durch die Verwendung dieses Amin-Katalysators keine signifikante Verringerung der Viskosität erreicht.

### Beispiel 1:

### a) Herstellung eines blockierten Polyurethan-Prepolymers:

41,5 g einer Mischung aus 2,4-Diisocyanatotoluol und 2,6-Diisocyanatotoluol (80:20 Gewichtsteile) wurden in einem Kolben mit Innenthermometer, mechanischem Rührer, Tropftrichter und Rückflusskühler bei 80°C vorgelegt. Innerhalb von 5 Stunden wurden dann unter Rühren 238,8 g des Polyetherpolyols Acclaim^{®} 2200 der OH-Zahl 56 zugegeben. Nun wurde die Reaktionsmischung solange bei 80°C unter Rühren prepolymerisiert, bis der theoretische NCO-Gehalt von 3,58 Gew.-% erreicht war. Bei einer Temperatur von 65 bis 75°C wurden anschließend noch 119,7 g eines handelsüblichen Kohlenwasserstoff-Harzes mit einem Hydroxylgruppengehalt von 4 Gew.-% (Novares^{®} LX 200) unter Rühren zugegeben, und die Reaktionsmischung mit 0,10 g N,N-Dimethyldodecylamin katalysiert. Nun wurde solange unter Rühren auf 80°C erwärmt, bis ein NCO-Gehalt (Titration) von 0,2 Gew.-% erreicht war. Schließlich wurden noch 0,10 g Benzoylchlorid zugegeben und das Produkt auf Raumtemperatur abgekühlt. Das erhaltene, blockierte Polyurethan-Prepolymer ergab folgende Kenndaten:

| | |
|---|---|
| blockierter NCO-Gehalt: | 2,42 Gew.-% |
| Viskosität (23°C): | 57.000 mPas |

Wie aus den Kenndaten des in Beispiel 1 a) beschriebenen Polyurethan-Prepolymers hervorgeht, wurde durch die Verwendung des Triorganoamin-Katalysators N,N-Dimethyldodecylamin ein deutlich niedriger viskoses Produkt erhalten, als bei Verwendung von Dibutylzinndilaurat (Vergleichsbeispiel 1).

### b) Herstellung eines Reaktivsystems:

20 g des nach Beispiel 2 hergestellten blockierten Polyurethan-Prepolymers wurden mit 20 g DER^{®} 358, 0,4 g Ölsäure, 0,2 g Perenol^{®} E 8, 0,2 g 2,3-Dimethyl-3,4,5,6-tetrahydropyrimidin sowie 6,77 g Octahydro-4.7-methanoinden-1(2).5(6)dimethanamin und 0,2 g Benzylalkohol vermischt und einen Tag bei Raumtemperatur ausgehärtet. Es wurde ein homogener, elastischer Kunststoff mit folgenden mechanischen Kennwerten erhalten:

| | |
|---|---|
| Bruchspannung: | 21,3 MPa |
| Bruchdehnung: | 49,6 % |
| Weiterreißwiderstand: | 34,4 N/mm |

Wie aus den mechanischen Kennwerten des in Beispiel 1 b) beschriebenen, elastifizierten Amin-Epoxid-Kunststoffs hervorgeht, wurden durch die Verwendung der erfindungsgemäß hergestellten Polyurethan-Prepolymere sogar bessere mechanische Eigenschaften erzielt (Beispiel 2) als bei Verwendung eines Prepolymers, welches nach dem Stand der Technik mit Zinn-haltigen Katalysatoren hergestellt wurde (Vergleichsbeispiel 1).

### Beispiel 2:

35,6 g einer Mischung aus 2,4-Diisocyanatotoluol und 2,6-Diisocyanatotoluol (80:20 Gewichtsteile) wurden in einem Kolben mit Innenthermometer, mechanischem Rührer, Tropftrichter und Rückflusskühler bei 80°C vorgelegt. Innerhalb von 5 Stunden wurde dann unter Rühren eine Mischung aus 261,0 g eines Polyetherpolyols der OH-Zahl 44, hergestellt durch basisch katalysierte, gleichzeitige Ethoxylierung und Propoxylierung (EO/PO-Verhältnis = 2:8) eines 2:1 Gemisches von Propylenglykol und Glycerin, und 0,02 g 3-Chlorpropionsäure zugegeben. Nun wurde die Reaktionsmischung solange bei 80°C unter Rühren prepolymerisiert, bis der theoretische NCO-Gehalt von 2,90 Gew.-% erreicht war. Bei einer Temperatur von 65 bis 75°C wurden anschließend noch 102,6 g eines handelsüblichen Kohlenwasserstoff-Harzes mit einem Hydroxylgruppengehalt von 4 Gew.-% (Novares^{®} LX 200) unter Rühren zugegeben, und die Reaktionsmischung mit 0,08 g N,N-Dimethyldodecylamin katalysiert. Nun wurde solange unter Rühren auf 80°C erwärmt, bis ein NCO-Gehalt (Titration) von 0,2 Gew.-% erreicht war. Schließlich wurden noch 0,08 g Benzoylchlorid zugegeben und das Produkt auf Raumtemperatur abgekühlt. Das erhaltene, blockierte Polyurethan-Prepolymer ergab folgende Kenndaten:

| | |
|---|---|
| blockierter NCO-Gehalt: | 2,22 Gew.-% |
| Viskosität (23°C): | 51.000 mPas |

Die Viskosität liegt deutlich unter der des entsprechenden, nach Vergleichsbeispiel 2 hergestellten blockierten Polyurethan-Prepolymers.

### Beispiel 3:

Analog dem in Beispiel 1 beschriebenen Verfahren, wurde aus 26,0 g einer Mischung aus 2,4-Diisocyanatotoluol und 2,6-Diisocyanatotoluol (80:20 Gewichtsteile) und 298,9 g des Polyetherpolyols Acclaim^{®} 4200 (OH-Zahl 28) ein Polyurethan-Prepolymer mit einem (theoretischen) NCO-Gehalt von 1,93 Gew.-% hergestellt, welches mit 74,9 g eines handelsüblichen Kohlenwasserstoff-Harzes mit einem Hydroxylgruppengehalt von 4 Gew.-% (Novares^{®} LX 200) in Gegenwart von 0,10 g N,N-Dimethyldodecylamin blockiert wurde. Nach dem Abstoppen mit 0,10 g Benzoylchlorid wurde ein blockiertes Polyurethan-Prepolymer mit folgenden Kenndaten erhalten:

| | |
|---|---|
| blockierter NCO-Gehalt: | 1,57 Gew.-% |
| Viskosität (23°C): | 23.000 mPas |

Die Viskosität liegt deutlich unter der des entsprechenden, nach Vergleichsbeispiel 3 hergestellten blockierten Polyurethan-Prepolymers.

### Beispiel 4:

Analog dem in Beispiel 1 beschriebenen Verfahren, wurde aus 32,0 g einer Mischung aus 2,4-Diisocyanatotoluol und 2,6-Diisocyanatotoluol (80:20 Gewichtsteile) und 275,7 g des Polyetherpolyols Acclaim^{®} 3201 (OH-Zahl 37) ein Polyurethan-Prepolymer mit einem theoretischen NCO-Gehalt von 2,51 Gew.-% hergestellt, welches mit 92,1 g eines handelsüblichen Kohlenwasserstoff-Harzes mit einem Hydroxylgruppengehalt von 4 Gew.-% (Novares^{®} LX 200) in Gegenwart von 0,10 g N,N-Dimethyldodecylamin blockiert wurde. Nach dem Abstoppen mit 0,10 g Benzoylchlorid wurde ein blockiertes Polyurethan-Prepolymer mit folgenden Kenndaten erhalten:

| | |
|---|---|
| blockierter NCO-Gehalt: | 2,01 Gew.-% |
| Viskosität (23°C): | 27.000 mPas |

Die Viskosität liegt deutlich unter der des entsprechenden, nach Vergleichsbeispiel 4 hergestellten blockierten Polyurethan-Prepolymers.

### Beispiel 5:

Analog dem in Beispiel 2 beschriebenen Verfahren wurde aus 41,4 g 2,4-Diisocyanatotoluol und 303,4 g des in Beispiel 2 beschriebenen Polyethers unter Zusatz von 10 mg 3-Chlorpropionsäure ein Isocyanat-funktionelles Prepolymer mit einem (theoretischen) NCO-Gehalt von 2,90 Gew.-% hergestellt, welches schließlich mit 55,1 g Nonylphenol in Gegenwart von 10 mg N,N-Dimethyldodecylamin blockiert und mit 10 mg Benzoylchlorid abgestoppt wurde. Das blockierte Polyurethan-Prepolymer zeigte folgende Kenndaten:

| | |
|---|---|
| blockierter NCO-Gehalt: | 2,46 Gew.-% |
| Viskosität (23°C): | 75.000 mPas |

Die Viskosität liegt deutlich unter der des entsprechenden, nach Vergleichsbeispiel 5 hergestellten blockierten Polyurethan-Prepolymers.

### Beispiel 6:

Analog dem in Beispiel 1 beschriebenen Verfahren wurde aus 155,8 g einer Mischung aus 2,4-Diisocyanatotoluol und 2,6-Diisocyanatotoluol (80:20 Gewichtsteile), 895,4 g Acclaim^{®} 2200 und 448,9 g Novares^{®} LX 200 unter Verwendung von 0,11 g N,N-Dimethylundecylamin und Abstoppen mit 0,22 g Benzoylchlorid ein blockiertes Polyurethan-Prepolymer mit folgenden Kenndaten erhalten:

| | |
|---|---|
| blockierter NCO-Gehalt: | 2,58 Gew.-% |
| Viskosität (23°C): | 65.000 mPas |

Die Viskosität liegt deutlich unter der des entsprechenden, nach Vergleichsbeispiel 1 hergestellten blockierten Polyurethan-Prepolymers.

### Beispiel 7:

Analog dem in Beispiel 1 beschriebenen Verfahren wurde aus 25,8 g einer Mischung aus 2,4-Diisocyanatotoluol und 2,6-Diisocyanatotoluol (80:20 Gewichtsteile), 148,1 g Acclaim^{®} 2200 und 76,0 g Novares^{®} LX 200 unter Verwendung von 0,06 g N,N-Dimethylundecylamin und Abstoppen mit 0,06 g Benzoylchlorid ein blockiertes Polyurethan-Prepolymer mit folgenden Kenndaten erhalten:

| | |
|---|---|
| blockierter NCO-Gehalt: | 2,57 Gew.-% |
| Viskosität (23°C): | 57.000 mPas |

### Beispiel 8:

Analog dem in Beispiel 1 beschriebenen Verfahren, wurde aus 59,2 g einer Mischung aus 2,4-Diisocyanatotoluol und 2,6-Diisocyanatotoluol (80:20 Gewichtsteile) und 170,1 g des Polyetherpolyols Acclaim^{®} 1000 (OH-Zahl 112) ein Polyurethan-Prepolymer mit einem theoretischen NCO-Gehalt von 6,23 Gew.-% hergestellt, welches mit 170,5 g eines handelsüblichen Kohlenwasserstoff-Harzes mit einem Hydroxylgruppengehalt von 4 Gew.-% (Novares^{®} LX 200) in Gegenwart von 0,14 g N,N-Dimethyldodecylamin blockiert wurde. Nach dem Abstoppen mit 0,14 g Benzoylchlorid wurde ein blockiertes Polyurethan-Prepolymer mit folgenden Kenndaten erhalten:

| | |
|---|---|
| blockierter NCO-Gehalt: | 3,60 Gew.-% |
| Viskosität (23°C): | 303.000 mPas |

### Beispiele 9 bis 14:

Analog dem in Beispiel 1 beschriebenen Verfahren wurden weitere blockierte Polyurethan-Prepolymere mit verschiedenen Triorganoamin-Katalysatoren herstellt. Die Art und die Menge des eingesetzten Triorganoamin-Katalysators sowie die Kenndaten des erhaltenen blockierten Polyurethan-Prepolymers sind in der nachfolgenden Tabelle 3 zusammengefasst (die Menge des zugesetzten Abstoppers Benzoylchlorid entsprach jeweils immer der Menge des eingesetzten Triorganoamin-Katalysators).

**Tabelle 3:**

| Beispiel | Triorganoamin-Katalysator | Menge Katalysator | blockierter NCO-Gehalt | Viskosität |
|---|---|---|---|---|
| | | [g] | [Gew.-%] | [mPas] |
| 9 | N,N,N',N'-Tetramethylethylendiamin | 0,17 | 2,49 | 63.000 |
| 10 | N,N-Dimethylaminocyclohexylamin | 0,06 | 2,59 | 59.000 |
| 11 | N,N,N',N'-Tetramethylhexamethylendiamin | 0,04 | 2,59 | 59.000 |
| 12 | N,N,N',N',N"-Pentamethyldiethylentriamin | 0,03 | 2,46 | 64.000 |

## Patentansprüche

1. Verfahren zur Herstellung von phenolisch-blockierten Polyurethan Prepolymeren, bei dem
a) ein oder mehrere Di- oder Polyisocyanate mit
b) mindestens einer isocyanatreaktiven Verbindung einer Funktionalität von mindestens 1,5,
zu einem NCO-funktionellen Polyurethan-Prepolymer umgesetzt werden und anschließend die freien NCO-Gruppen mit
c) mindestens einem phenolische OH-Gruppen aufweisenden Kohlenwasserstoffharz
d) in Anwesenheit eines Katalysators
blockiert werden, der mindestens ein Triorganoamin der folgenden Typen enthält:
i) Verbindungen der allgemeinen Formel (I) 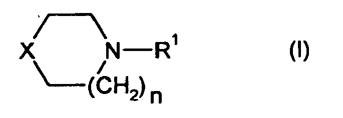 wobei
R¹ für einen gegebenenfalls verzweigten C₁-C₃₀-Alkylrest steht,
X gleich O, S oder die Gruppe N-R¹ und
n gleich 0 oder 1 ist,
ii) Verbindungen ausgewählt aus der Gruppe bestehend aus N,N-Dimethyldodecylamin, N,N-Dimethylundecylamin, N,N,N',N'-Tetramethylethylendiamin, N,N,N',N'-Tetramethylhexamethylendiamin, N,N,N',N',N"-Pentamethyldiethylentriamin oder N,N-Dimethylcyclohexylamin.

2. Verfahren zu Herstellung phenolisch-blockierter Polyurethan-Prepolymere nach Anspruch 1, **dadurch gekennzeichnet, dass** als Komponente d) ausschließlich Triorganoamine vom Typ ii) eingesetzt werden.

3. Verfahren zu Herstellung phenolisch-blockierter Polyurethan-Prepolymere nach Anspruch 3, **dadurch gekennzeichnet, dass** als Katalysator d) nur N,N-Dimethyldodecylamin oder N,N-Dimethylundecylamin eingesetzt werden.

## Claims

1. Process for the preparation of phenolically blocked polyurethane prepolymers, in which
a) one or more di-or poly-isocyanates are reacted with
b) at least one isocyanate-reactive compound having a functionality of at least 1.5
to give an NCO-functional polyurethane prepolymer, and then the free NCO groups are blocked with
c) at least one hydrocarbon resin containing phenolic OH groups
d) in the presence of a catalyst which contains at least one triorganoamine of the following types:
i) compounds of the general formula (I) 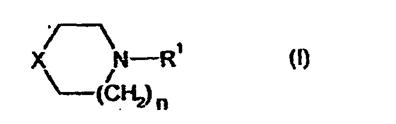 wherein
R¹ represents an optionally branched C₁-C₃₀- alkyl radical,
X is O, S or the group N-R¹ and
n is 0 or 1,
ii) compounds selected from the group consisting of N,N-dimethyldodecylamine, N,N-dimethylundecylamine, N,N,N',N'-tetramethylethylenediamine, N,N,N',N'-tetramethylhexamethylenediamine, N,N,N',N',N"-pentamethyldiethylenetriamine or N,N-dimethylcyclohexylamine.

2. Process for the preparation of phenolically blocked polyurethane prepolymers according to claim 1, **characterised in that** only triorganoamines of type ii) are used as component d).

3. Process for the preparation of phenolically blocked polyurethane prepolymers according to claim 2, **characterised in that** only N,N-dimethyldodecylamine or N,N-dimethylundecylamine is used as the catalyst d).

## Revendications

1. Procédé pour la préparation de prépolymères de polyuréthane phénoliquement-bloqués, dans lequel on fait réagir
a) un ou plusieurs di- ou polyisocyanates avec
b) au moins un composé isocyanate-réactif d'une fonctionnalité d'au moins 1,5, en un prépolymère de polyuréthane NCO-fonctionnel et on bloque ensuite les groupes NCO libres avec
c) au moins une résine hydrocarbonée présentant des groupes OH phénoliques
d) en présence d'un catalyseur
lequel contient au moins une triorganoamine des types suivants :
i) des composés de la formule générale (I) 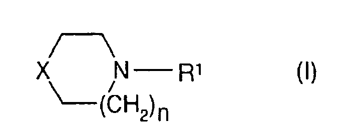 dans laquelle
R¹ représente un reste alkyle en C₁-C₃₀ éventuellement ramifié,
X est O, S ou le groupe N-R¹ et
n est égal à 0 ou à 1,
ii) des composés choisis dans le groupe constitué de la N,N-diméthyldodécylamine, la N,N-diméthylundécylamine, la N,N,N',N'-tétraméthylènediamine, la N,N,N',N'-tétraméthylhexaméthylènediamine, la N,N,N',N',N"-pentaméthyldiéthylènetriamine ou la N,N-diméthylcyclohexylamine.

2. Procédé pour la préparation de prépolymères de polyuréthane phénoliquement bloqués selon la revendication 1, **caractérisé en ce que** l'on utilise comme constituant d) exclusivement des triorganoamines du type ii).

3. Procédé pour la préparation de prépolymères de polyuréthane phénoliquement bloqués selon la revendication 3, **caractérisé en ce que** l'on utilise comme catalyseur d) uniquement la N,N-diméthyldodécylamine ou la N,N-diméthylundécylamine.
